# EUROPEAN PATENT APPLICATION

(11) **EP 4 043 340 A1**
(43) Date of publication of application: **17.08.2022**
(21) Application number: 19948841.2
(22) Date of filing: 08.10.2019
(51) Int. Cl.: B64C 13/04, B64C 27/08, B64C 39/02

(54) **AERIAL VEHICLE**

(71) Applicant: A.L.I. Technologies Inc., Tokyo 105-0011 (JP)
(72) Inventor: ARAKAWA, Yasuhiro, Tokyo 105-0011 (JP); TAKAGI, Yutaka, Tokyo 105-0011 (JP); OBA, Takafumi, Tokyo 105-0011 (JP); SHIROTA, Takeru, Tokyo 105-0011 (JP); TAKIZAWA, Yuki, Tokyo 105-0011 (JP); NAKANO, Hiroshi, Tokyo 105-0011 (JP)
(74) Representative: Ipside
(86) International application number: PCT/JP2019/039710
(87) International publication number: WO 2021/070263

(57) **Abstract**

To provide an aerial vehicle that can realize ease of operation during driving. An aerial vehicle according to the present technology includes: a vehicle body extending in a front-rear direction; a saddle section provided on an upper side of the vehicle body; a grip section provided on the front side of the saddle section in the vehicle body; and a rotary wing section which is provided in the vehicle body and which generates lift and/or thrust with respect to the vehicle body; wherein an operation section for performing operations pertaining to actions relating to ascent and/or propulsion of the vehicle body is provided in the grip section.

## Description

### Technical Field

The present invention relates to an aerial vehicle, and more particularly relates to an aerial vehicle which a rider can ride and which ascends from the ground and moves.

### Background Art

An aerial vehicle which is capable of ascending and moving with a rider on board can move without being subject to restrictions with respect to movement which a moving body such as a motorcycle that moves on land is subjected to in relation to other moving bodies when moving on land, and therefore, it is expected that such aerial vehicles will be realized as new means of transportation.

For example, Patent Literature 1 discloses technology relating to an aerial vehicle that is also referred to as a so-called "hoverbike" which, in a state in which a rider is on board, ascends to a height of about 50 cm to 100 cm from the ground and moves by means of rotation of propellers.

### Citation List

### Patent Literature

Patent Literature 1: Japanese Patent Laid-Open No. 2019-14396

### Summary of Invention

### Technical Problem

When a rider drives such an aerial vehicle, there is a need for ease of operation with respect to the driving experience of the rider, which is a technical feature that an aerial vehicle should have. In the technology disclosed in Patent Literature 1, training is required in order for a rider to drive the vehicle as desired.

An object of the present invention, which has been made in view of the circumstances described above, is to provide an aerial vehicle with which it is possible to realize ease of operation during driving.

### Solution to Problem

An aerial vehicle according to the present invention for achieving the aforementioned object includes: a vehicle body extending in a front-rear direction; a saddle section provided on an upper side of the vehicle body; a grip section provided on a front side of the saddle section in the vehicle body; and a rotary wing section which is provided in the vehicle body and which generates lift and/or thrust with respect to the vehicle body; wherein an operation section for performing operations pertaining to actions relating to ascent and/or propulsion of the vehicle body is provided in the grip section.

### Advantageous Effect of Invention

According to the technology of the present disclosure, ease of operation during driving can be realized.

### Brief Description of Drawings

[Figure 1] Figure 1 is an oblique perspective view illustrating a configuration example of an aerial vehicle according to one embodiment of the present disclosure.
[Figure 2] Figure 2 is a side perspective view illustrating a configuration example of the aerial vehicle according to the embodiment illustrated in Figure 1.
[Figure 3] Figure 3 is a block diagram illustrating a hardware configuration example of the aerial vehicle according to the embodiment illustrated in Figure 1.
[Figure 4] Figure 4 is an enlarged view of a grip section of the aerial vehicle in an area IV in Figure 2.
[Figure 5] Figure 5 is a view illustrating a configuration example of a left operation section according to the embodiment illustrated in Figure 1.
[Figure 6] Figure 6 is a view illustrating a configuration example of a right operation section according to the embodiment illustrated in Figure 1.

### Description of Embodiment

Hereunder, a preferred embodiment of the present disclosure is described in detail while referring to the accompanying drawings. Note that, in the present description and the accompanying drawings, constituent elements having substantially the same functional configuration are denoted by the same reference characters and a duplicate description thereof is omitted.

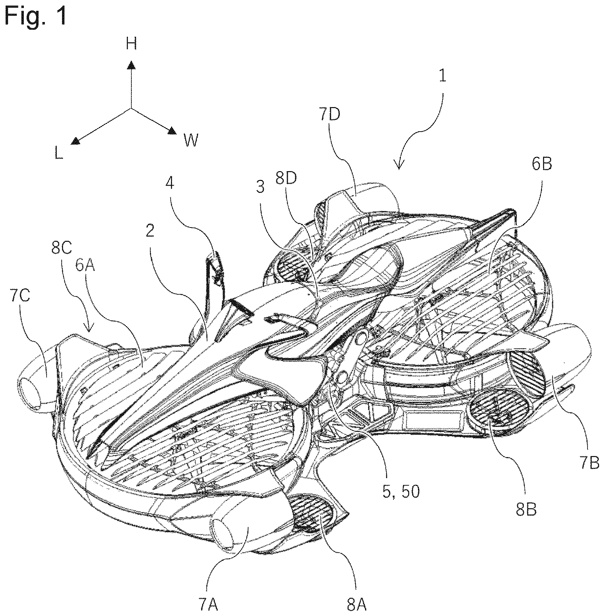

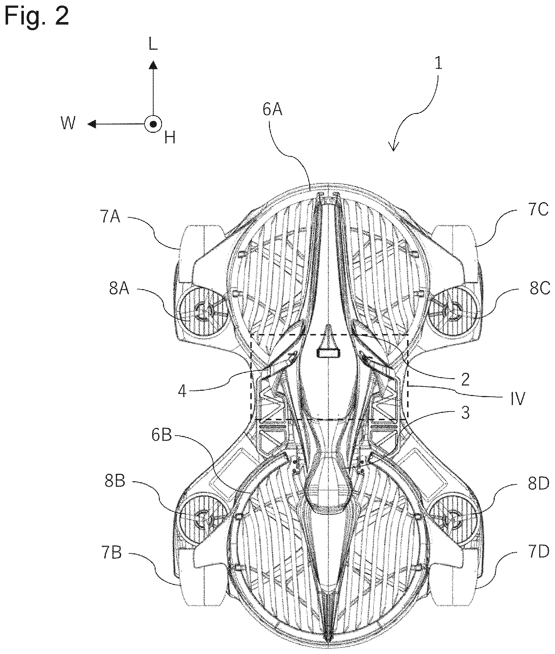

Figure 1 is an oblique perspective view illustrating a configuration example of an aerial vehicle 1 according to one embodiment of the present disclosure. Figure 2 is a side perspective view illustrating a configuration example of the aerial vehicle 1 according to the present embodiment. As illustrated in Figure 1 and Figure 2, the aerial vehicle 1 is means of transportation that is also referred to as a so-called "hoverbike" which a rider can ride and which is capable of ascending to a height of about 50 cm to 100 cm from the ground and moving in the horizontal direction. Note that, with regard to the respective coordinate axes in the respective drawings, reference character L denotes the front-rear direction (front side is primary) of the aerial vehicle 1 (vehicle body 2), reference character W denotes the width direction of the aerial vehicle 1 (vehicle body 2) (left direction is primary), and reference character H denotes the vertical direction (upper side is primary) of the aerial vehicle 1 (vehicle body 2).

The aerial vehicle 1 includes a vehicle body 2, a saddle section 3, a grip section 4, an engine 50 that is an example of a motive power section 5, first rotary wing sections 6 (6A, 6B), second rotary wing sections 7 (7A to 7D), third rotary wing sections 8 (8A to 8D), and an exhaust system 9. Note that the aerial vehicle 1 can include other constituent elements, and such constituent elements will be described later.

The vehicle body 2 is formed to extend in a front-rear direction L at the upper part of the aerial vehicle 1. The vehicle body 2 can be formed of, for example, a material having a relatively low specific gravity and high strength such as a carbon fiber reinforced polymer, a glass fiber reinforced polymer, aluminum, an aluminum alloy, a titanium alloy or a magnesium alloy.

The saddle section 3 and the grip section 4 are provided on the upper side at a central part in the front-rear direction L of the vehicle body 2.

The saddle section 3 corresponds to a seat which the rider straddles the vehicle body 2 of the aerial vehicle 1 to sit on. The saddle section 3 may be made in a shape which projects downward so that the rider can stably sit thereon. Note that, the saddle section 3 is one example of a riding section, and the saddle section 3 is not limited to the shape or structure illustrated in the drawings. The form of the saddle section 3 is not particularly limited as long as the saddle section 3 has a structure which it is possible for a rider to ride on.

The grip section 4 is provided for the rider who has straddled the saddle section 3 to hold on to. The shape of the grip section 4 is not limited to the shape illustrated in the drawings.

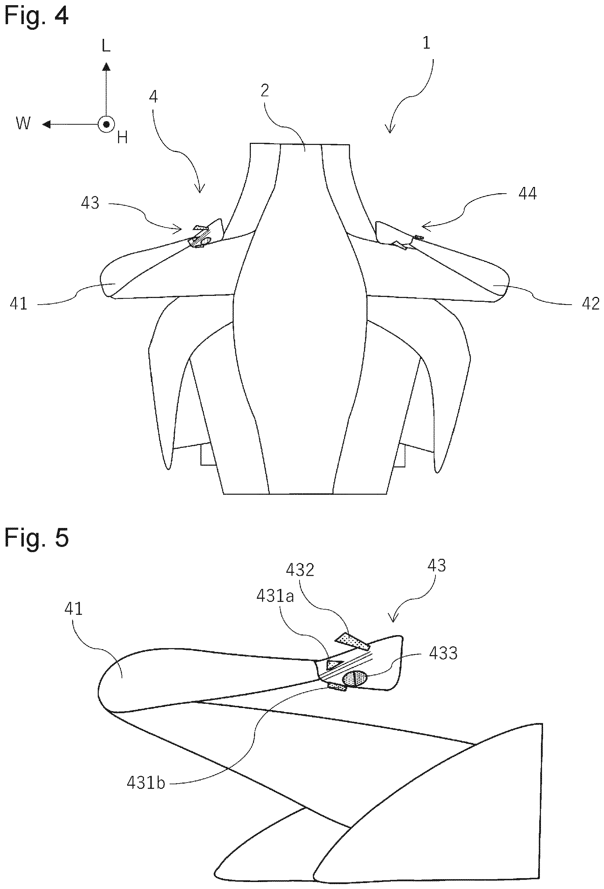

An operation section or interface or the like for allowing the rider to control operations relating to ascent and/or propulsion of the vehicle body is provided in the grip section 4. Further, the grip section 4 is fixed to the vehicle body 2. An operation section such as buttons, levers, a steering wheel or like is provided in the grip section 4. The configuration of the operation section provided in the grip section 4 will be described later referring to Figure 4 that shows an enlarged view of an area IV in Figure 2, and the like. An input signal that is input to the operation section can be sent to a control section 10 to be described later.

The engine 50 that is an example of the motive power section 5 is provided on the underside of the vehicle body 2, at a position below the saddle section 3. A gasoline engine, a diesel engine, a gas engine or the like may be mentioned as examples of the engine 50, and the mechanism of the engine 50 is not particularly limited.

The first rotary wing sections 6 are an example of rotary wing sections that generate lift and/or thrust with respect to the vehicle body 2. The first rotary wing sections 6A and 6B are provided in a pair at the front and rear of the motive power section 5. In the example illustrated in Figure 1 and Figure 2, at the front and rear of the motive power section 5, the first rotary wing sections 6A and 6B are provided below tapered frames which constitute the front and rear of the vehicle body 2. The shape of these frames allows the first rotary wing sections 6 to smoothly take in a large amount of gas.

The first rotary wing sections 6 each include a propeller for generating lift, and a duct that houses the propeller and has vents at the upper and lower ends thereof. The propellers are, for example, so-called "contra-rotating propellers" in which a pair of blades that are arranged one on top of the other in the vertical direction rotate in opposite directions to each other. Rotation of the propellers causes an air flow to be generated from above to below. Lift is generated at the vehicle body 2 by the air flow, and the vehicle body 2 can be caused to ascend. Note that, although the first rotary wing section 6 according to the present embodiment is provided at the front and rear, respectively, of the vehicle body 2, the first rotary wing section 6 may be provided at least at one of the front and rear. By tilting the vehicle body 2 in a pitch direction (rotation direction that takes a width direction W as the rotation axis) or the roll direction (rotation direction that takes a front-rear direction L as the rotation axis) or tilting the first rotary wing sections 6, thrust in the horizontal direction is generated by the first rotary wing sections 6. By this means, the aerial vehicle 1 can be propelled.

Further, louvers may be provided in at least one of (the upper end side is preferable) the vents at the upper and lower ends of the duct of each of the first rotary wing sections 6. For example, as illustrated in Figure 1, the louvers have a strip shape and are arranged in the width direction, and may be provided so as to incline downward from the outer side to the center side with the front-rear direction L as the central axis. By means of such louvers, the entry of foreign objects into the duct can be suppressed. Further, by providing louvers, in a case where an object flies out from the inside of the duct also, the louvers can serve as an obstacle to the object flying out from the duct. In addition, the louvers can regulate the flow of gas that flows in from above. Further, providing the louvers makes it difficult for the rider who is riding the aerial vehicle 1 to see the propellers, and hence a sensation of fear of the rider can be alleviated.

Further, a variable flap mechanism may be provided at one part of the ducts of the first rotary wing sections 6. The flow amount and/or flow direction of gas that flows in or flows out can be controlled by such a flap mechanism. By this means, control of the flight of the aerial vehicle 1 can be performed more precisely.

The second rotary wing sections 7 are an example of rotary wing sections that generate lift and/or thrust with respect to the vehicle body 2. In particular, the second rotary wing sections 7 can mainly impart thrust to the vehicle body 2 in the front-rear direction of the vehicle body 2. The second rotary wing section 7A is provided on the front left side of the vehicle body 2, the second rotary wing section 7B is provided on the rear left side of the vehicle body 2, the second rotary wing section 7C is provided on the front right side of the vehicle body 2, and the second rotary wing section 7D is provided on the rear right side of the vehicle body 2. The second rotary wing sections 7A, 7B, 7C and 7D are arranged on the outer side in the width direction of the first rotary wing sections 6, at the front and rear of the vehicle body 2.

Each of the second rotary wing sections 7 includes a duct that causes gas to circulate in the front-rear direction of the vehicle body 2, and a propeller that generates thrust inside the duct. A circulation port is provided at each end in the front-rear direction of the duct. The propeller may be, for example, a contra-rotating propeller, or may be a single propeller. Further, the rotation direction or the pitch angle of the propeller may be appropriately changed by the control section 10 or a motor driver 13 that are described later or the like. By this means, the second rotary wing sections 7 can generate thrust along at least one direction with respect to the front and rear directions of the vehicle body 2. Note that, although normally the second rotary wing sections 7 generate thrust in the forward direction of the vehicle body 2, the second rotary wing sections 7 may generate thrust in the rearward direction. The second rotary wing sections 7 are used, for example, to change the speed of the aerial vehicle 1, and to perform control that causes the aerial vehicle 1 to rotate around a yaw axis (axis in the direction along a vertical direction H).

The third rotary wing sections 8 are an example of rotary wing sections that generate lift and/or thrust with respect to the vehicle body 2. In particular, the third rotary wing sections 8 can mainly impart thrust to the vehicle body 2 in the vertical direction of the vehicle body 2. The third rotary wing section 8A is provided on the front left side of the vehicle body 2, the third rotary wing section 8B is provided on the rear left side of the vehicle body 2, the third rotary wing section 8C is provided on the front right side of the vehicle body 2, and the third rotary wing section 8D is provided on the rear right side of the vehicle body 2. The third rotary wing sections 8A, 8B, 8C and 8D are arranged on the outer side in the width direction of the first rotary wing sections 6, at the front and rear of the vehicle body 2.

Each of the third rotary wing sections 8 includes a casing that causes gas to circulate in the vertical direction of the vehicle body 2, and a propeller that generates thrust inside the casing. The casing is provided with a circulation port at each of an upper end part and a lower end part thereof. The propeller may be, for example, a contra-rotating propeller, or may be a single propeller. Further, the rotation direction or the pitch angle of the propeller may be appropriately changed by the control section 10 or a motor driver 13 that are described later or the like. By this means, the third rotary wing sections 8 can generate thrust along at least one direction among the upward direction and downward direction of the vehicle body 2. Note that, although normally the third rotary wing sections 8 generate thrust in the upward direction of the vehicle body 2, the third rotary wing sections 8 may generate thrust in the downward direction. The third rotary wing sections 8, for example, are used to play an auxiliary role during ascent by means of the first rotary wing sections 6 of the aerial vehicle 1, and are used to control the attitude of the aerial vehicle 1 and to perform control that causes the aerial vehicle 1 to rotate around a pitch axis (axis in the direction along the width direction W) and/or around a roll axis (axis in the direction along the front-rear direction L).

The exhaust system 9 is a system that processes exhaust gas discharged from the engine 50. For example, a known exhaust device or the like can be used as the exhaust system 9. The exhaust system 9 is provided below the saddle section 3. In the example illustrated in Figure 2, the exhaust system 9 is provided underneath the engine 50.

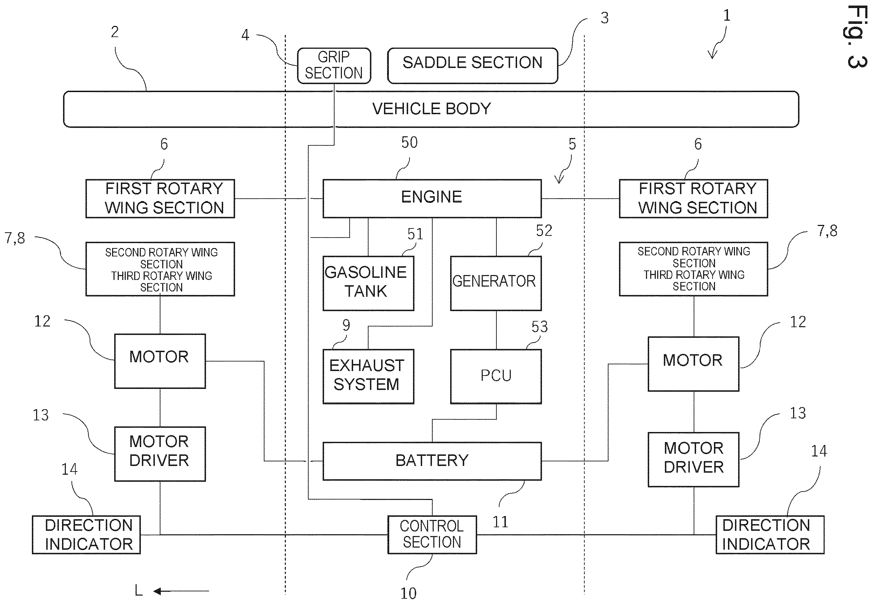

Next, the constituent elements of the aerial vehicle 1 will be described in more detail using Figure 3. Figure 3 is a block diagram illustrating a hardware configuration example of the aerial vehicle 1 according to the present embodiment. Note that, a description of constituent elements which have already been described above will be omitted here. Further, the dashed lines shown in Figure 3 are virtual boundary lines that define a front part, a central portion, and a rear part of the aerial vehicle 1 (the vehicle body 2). That is, the region in which the saddle section 3 is provided corresponds to the central part of the vehicle body 2. Further, an arrow L shown in Figure 3 is an arrow indicating the forward direction of the vehicle body 2.

As illustrated in Figure 3, in the central part of the vehicle body 2 are provided the saddle section 3, the grip section 4, and the motive power section 5, and in addition, the exhaust system 9, the control section 10, and a battery 11 can also be provided in the central part.

The motive power section 5 may also include a gasoline tank 51, a generator 52, and a PCU (power control unit) 53, in addition to the engine 50. The gasoline tank 51 stores gasoline to be supplied to the engine 50. The generator 52 has a function of generating electric power by means of motive power obtained using the engine 50 as a motive power source. The generator 52 is controlled by the PCU 53, and the generated electric power is stored in the battery 11. The PCU 53 has a function of performing management of the electric power in the battery 11.

In addition to the first rotary wing sections 6, the second rotary wing sections 7 and the third rotary wing sections 8, a motor 12 and a motor driver 13 are provided for each of the second rotary wing sections 7 and the third rotary wing sections 8 in the front part and the rear part of the vehicle body 2. Further, a direction indicator 14 can be provided in the front part and the rear part of the vehicle body 2.

In the present embodiment, motive power generated by the engine 50 is transmitted to the first rotary wing sections 6 via a power shaft (not shown) or the like. On the other hand, motive power is transmitted to the second rotary wing sections 7 and the third rotary wing sections 8 directly through a power shaft or the like from the motor 12 provided for each of the second rotary wing sections 7 and the third rotary wing sections 8.

Note that, although in the present embodiment a configuration is adopted in which the motors 12 are provided in a form in which the motors 12 are attached to the second rotary wing sections 7 and the third rotary wing sections 8, respectively, the present technology is not limited to this example. For example, the motor 12 may be provided underneath the saddle section 3 in the central part of the vehicle body 2. In this case, the motor 12 is an example of the motive power section 5. The number of motors 12 is not particularly limited, and for example the motors 12 may be provided in a number that corresponds to the number of the second rotary wing sections 7 and third rotary wing sections 8.

The control section 10 has a processor, a memory, sensors and the like. The processor is constituted by a CPU (central processing unit) or a GPU (graphics processing unit) or the like, and controls the operation of each constituent element of the aerial vehicle 1, and performs control of sending and receiving of data between constituent elements, and processing required for execution of a program and the like.

The memory is constituted by a main storage device constituted by a volatile storage device such as a DRAM (dynamic random access memory), and an auxiliary storage device constituted by a nonvolatile storage device such as a flash memory or a HDD (hard disk drive). The memory is used as a work area of the processor, while on the other hand, various kinds of settings information and the like such as logic, codes or program instructions which can be executed by the control section 10 are stored in the memory.

In the present embodiment, the sensors are constituted by various kinds of sensors such as a weight sensor, a force sensor, inertial sensors (an acceleration sensor, a gyro sensor), a GPS sensor that receives radio waves from a GPS satellite, a proximity sensor, an optical or ultrasonic ranging sensor, a vision/image sensor (camera), an air pressure sensor that measures atmospheric pressure, and a temperature sensor that measures temperature.

The control section 10, for example, controls the output of the engine 50 and the motors 12 based on an input signal obtained from the operation section provided in the grip section 4, or a signal obtained from a sensor. By this means, the speed of rotation and the like of each rotary wing section are controlled, and ascent or flight of the aerial vehicle 1 is performed. Note that, a position at which the control section 10 is provided is not limited to the central part or the like of the vehicle body 2. Further, the control section 10 performs control pertaining to lighting and extinguishing of the direction indicator 14 that indicates the traveling direction of the vehicle body, based on an input signal obtained from the aforementioned operation section. Note that, the direction indicator 14 may include, for example, a device that indicates not only turning to the left and right, but also indicates movement in the vertical direction (that is, changing of the altitude).

Next, constituent elements of the grip section 4 will be described in detail using Figure 4 to Figure 6. Figure 4 is

Figure 4 is an enlarged view of the grip section 4 of the aerial vehicle 1 in the area IV in Figure 2. As illustrated in Figure 4, the grip section 4 is provided on the front side of the saddle section 3 (not illustrated) of the vehicle body 2 of the aerial vehicle 1. A pair of the grip sections 4 are provided so as to be symmetrical in the width direction W of the vehicle body 2.

The grip sections 4 each include an arm section (left arm section 41, right arm section 42) that has one end connected and fixed to the vehicle body 2 and that extends from the vehicle body. An operation section (left operation section 43, right operation section 44) is provided in a portion at the other end of each arm section.

The left arm section 41 and the right arm section 42 are each fixed to the vehicle body 2. For example, these arm sections are provided in a non-rotatable condition on the vehicle body 2. That is, for example, unlike the handle of a general two-wheeled vehicle, the arm sections according to the present embodiment need not be given a function of performing steering by rotation of the arm sections themselves. By grasping the arm sections, the rider can stably ride the aerial vehicle 1 during flight also.

On the other hand, an operation section for controlling the aerial vehicle 1 is provided at a tip portion of each arm section. The operation section is realized, for example, by mechanical or electrical input devices such as buttons, levers, throttles, or switches. Signals and information input from the operation section are sent to the control section 10. Based on such signals and information, the control section 10 controls the output of each rotary wing section and controls the operations of the constituent elements mounted in the aerial vehicle 1.

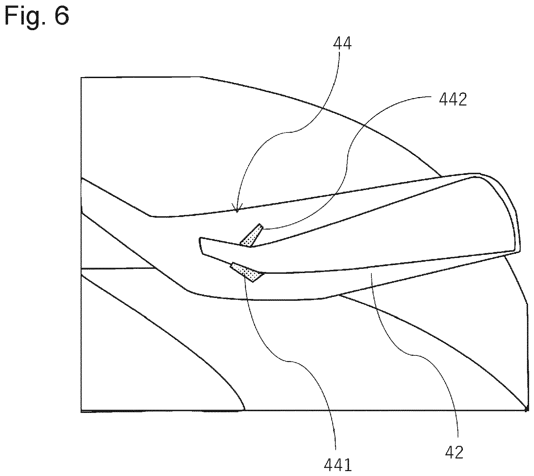

Next, a specific configuration example of the operation section will be described. Figure 5 and Figure 6 are views illustrating configuration examples of a left operation section 43 and a right operation section 44 according to the present embodiment. Figure 5 and Figure 6 are views in which regions including the left arm section 41, the right arm section 42, the left operation section 43 and the right operation section 44 are enlarged. The tip portions of the left arm section 41 and the right arm section 42 at which the left operation section 43 and the right operation section 44 are provided may have a shape which it is possible to wrap a hand around so that the tip portions are easy for the rider to grasp. This portion is called a "grip".

First, referring to Figure 5, the left operation section 43 includes altitude changing buttons 431a and 431b, a yaw rotation lever 432, and a blinker button 433.

The altitude changing buttons 431a and 431b are an example of a first input section. The altitude changing buttons 431a and 431b are buttons for changing the altitude while the aerial vehicle 1 is in flight. The altitude changing buttons 431a and 431b are provided at the base portion of the grip of the left arm section 41, and can be operated by fingers or the palm or the like of the rider.

For example, when the altitude changing button 431a is pressed, the aerial vehicle 1 ascends. Further, when the altitude changing button 431b is pressed, the aerial vehicle 1 descends. The correspondence between the method for changing the altitude and the buttons may be the opposite of the correspondence in the foregoing example.

In the present embodiment, when the altitude changing button 431 is pressed, a signal relating to changing of the altitude is sent to the control section 10. Based on the signal, the control section 10 controls the output of the engine 50 to adjust the speed of rotation of the first rotary wing sections 6. In addition, based on the signal, the control section 10 can control the output of the motors 12 to adjust the speed of rotation of the third rotary wing sections 8. By means of such adjustment, changing of the altitude of the aerial vehicle 1 is performed. At such time, for example, the amount of change in the altitude of the aerial vehicle 1 or the speed pertaining to ascending or descending may be controlled according to the amount by which the altitude changing button 431 is pressed or the amount of time for which the altitude changing button 431 is pressed.

The yaw rotation lever 432 is an example of a second input section. The yaw rotation lever 432 is a lever for performing rotation around the yaw axis of the aerial vehicle 1. The yaw rotation lever 432 is provided, for example, at the tip portion of the grip of the left arm section 41, and can be operated by a finger or the palm or the like of the rider.

For example, the yaw rotation lever 432 is provided so as to be rotatable in the left direction (counterclockwise direction) or the right direction (clockwise direction) around a connection portion with the grip. More specifically, when the yaw rotation lever 432 rotates in the left direction, the aerial vehicle 1 rotates in the left direction around the yaw axis. Further, when the yaw rotation lever 432 rotates in the right direction, the aerial vehicle 1 rotates in the right direction around the yaw axis. The correspondence between the rotation directions of the yaw rotation lever 432 and the rotation directions of the aerial vehicle 1 may be the opposite of the correspondence in the foregoing example.

In the present embodiment, when the yaw rotation lever 432 rotates, signals indicating the rotation direction, rotation amount and angular velocity applied to the rotation of the yaw rotation lever 432 or the like are sent to the control section 10. Based on these signals, the control section 10 controls the output of the motors 12 through the motor drivers 13 to adjust the speed of rotation and the like of the propeller of each of the second rotary wing sections 7 provided on the left and right sides at the front and rear of the vehicle body 2. By means of such adjustment, the aerial vehicle 1 rotates about the yaw axis. At such time, for example, the rotational speed of the aerial vehicle 1 around the yaw axis may be controlled according to the angular velocity at the time of rotation of the yaw rotation lever 432.

The blinker button 433 is an example of a third input section. The blinker button 433 is a button for lighting the direction indicators 14 of the aerial vehicle 1. The blinker button 433 is provided at the base portion of the grip of the left arm section 41, and can be operated by a finger or the palm or the like of the rider.

For example, the number of buttons included in the blinker button 433 and the arrangement positions thereof are determined according to the kinds of directions to be indicated by the direction indicator 14. More specifically, in a case where the direction indicator 14 corresponds to the left and right directions, the blinker button 433 is realized by arranging buttons for lighting left and right blinkers side by side.

In the present embodiment, when the blinker button 433 is pressed, a signal pertaining to a direction indication that corresponds to the pressed button is sent to the control section 10. Based on the signal, the control section 10 controls so that a lamp that corresponds to the corresponding direction of each direction indicator 14 is turned on.

Next, referring to Figure 6, the right operation section 44 includes a speed adjusting lever 441 and a stop/hovering lever 442.

The speed adjusting lever 441 is an example of a fourth input section for performing operations relating to propulsion of the vehicle body. The speed adjusting lever 441 is a lever for adjusting the speed with respect to propulsion when the aerial vehicle 1 is in flight, and has a function like a so-called "accelerator". The speed adjusting lever 441, for example, is provided at the base portion of the grip of the right arm section 42, and can be operated by a finger or the palm or the like of the rider.

For example, the speed adjusting lever 441 is provided so as to be rotatable in the upward direction (counterclockwise direction) or the downward direction (clockwise direction) around a connection portion with the grip. More specifically, when the speed adjusting lever 441 rotates in the upward direction, the aerial vehicle 1 accelerates in the forward direction. Further, when the speed adjusting lever 441 rotates in the downward direction, the aerial vehicle 1 accelerates in the rearward direction. The correspondence between the rotation directions of the speed adjusting lever 441 and the acceleration directions with respect to the speed of the aerial vehicle 1 may be the opposite of the correspondence in the foregoing example.

In the present embodiment, when the speed adjusting lever 441 rotates, signals such as the rotation direction, rotation amount and angular velocity applied to the rotation of the speed adjusting lever 441 are sent to the control section 10. Based on these signals, the control section 10 controls the output of the engine 50 and/or the output of the motors 12 (controls the output of the motors 12 through the motor drivers 13), to adjust the speed of rotation and the like of each of the propellers of at least one of the first rotary wing sections 6, the second rotary wing sections 7 and the third rotary wing sections 8. By means of such adjustment, in the aerial vehicle 1, a change occurs in the attitude of the vehicle body 2, and the speed of rotation of the propellers of the respective rotary wing sections is also increased or decreased, and thus the speed of the aerial vehicle 1 changes. At such time, for example, the degree of acceleration/deceleration with respect to the increase or decrease in the speed of the aerial vehicle 1 may be controlled according to the angular velocity at the time of rotation of the speed adjusting lever 441.

The stop/hovering lever 442 is an example of a fourth input section for performing operations relating to propulsion of the vehicle body. The stop/hovering lever 442 is a lever for stopping propulsion (including landing) of the aerial vehicle 1 or placing the aerial vehicle 1 in a hovering state during flight, and has a function like a so-called "brake". The stop/hovering lever 442, for example, is provided at the base portion of the grip of the right arm section 42 at a position which is different from the position of the speed adjusting lever 441, and can be operated by a finger or the palm or the like of the rider.

For example, the stop/hovering lever 442 is provided so as to be rotatable around a connection portion with the grip. Normally, the stop/hovering lever 442 is urged so as to be maintained at a position that is separated from the grip. By grasping the stop/hovering lever 442 so as to bring the stop/hovering lever 442 near to the grip, the aerial vehicle 1 can be caused to stop or to hover. Note that, the stop/hovering lever 442 can also be caused to function as a lever that serves as a trigger for the aerial vehicle 1 to start ascending. That is, by operating the stop/hovering lever 442 with respect to the aerial vehicle 1 that is on the ground, it is possible to cause the aerial vehicle 1 to ascend and enter a hovering state.

In the present embodiment, when the stop/hovering lever 442 rotates, signals such as the rotation direction, rotation amount and angular velocity applied to the rotation of the stop/hovering lever 442 are sent to the control section 10. Based on these signals, the control section 10 controls the output of the engine 50 and/or the output of the motors 12 through the motor drivers 13 to adjust the speed of rotation and the like of each of the propellers of at least one of the first rotary wing sections 6, the second rotary wing sections 7 and the third rotary wing sections 8. By means of such adjustment, in the aerial vehicle 1, a change occurs in the attitude of the vehicle body 2, and the speed of rotation of the propellers of the respective rotary wing sections is also increased or decreased, and the aerial vehicle 1 is caused to transition to a stopped or hovering state. At such time, for example, the magnitude of braking to the stopped or hovering state of the aerial vehicle 1 may be controlled according to the angular velocity at the time of rotation of the stop/hovering lever 442.

A configuration example of the operation section of the grip section 4 has been described above. Note that, the configuration of the operation section provided in the grip section 4 is not limited to the configuration example illustrated in Figure 4 to Figure 6, and input sections for operating functions relating to ascent, propulsion, braking, and indication of intention and the like of the aerial vehicle 1 may be appropriately provided in the operation section (for example, in the aforementioned grip) of the grip section 4.

By consolidating functions relating to ascent, propulsion and the like of the aerial vehicle 1 in the grip section 4 in this way, it is possible for the rider to easily drive the aerial vehicle 1 without taking their hands away from the grip section 4 or changing the positions of their hands on the grip section 4 while driving the aerial vehicle 1. Further, by concentrating the operation section on the aforementioned grip, it is possible for the rider to have all the operations to be performed for driving at their fingertips.

Further, by realizing the operations related to ascent and/or propulsion of the aerial vehicle 1 with buttons, levers or the like, driving of the aerial vehicle 1 can be performed more subtly and accurately. Further, as illustrated in Figure 6, by consolidating a group of operation sections related to ascent and/or propulsion of the aerial vehicle 1 in the right operation section, from an ergonomic standpoint, it is possible to allow the rider to perform more accurate driving.

Whilst a preferred embodiment of the present disclosure has been described in detail above with reference to the accompanying drawings, the technical scope of the present disclosure is not limited to the above examples. It is clear that a person having common knowledge in the field of the art to which the present disclosure pertains will be able to contrive various examples of changes and modifications within the category of the technical idea described in the appended claims, and it should be understood that they also naturally belong to the technical scope of the present disclosure.

For example, although in the foregoing embodiment a configuration is adopted in which the rotary wing sections are composed of the first rotary wing sections 6 that generate lift for causing the vehicle body 2 to ascend and the second rotary wing sections 7 and third rotary wing sections 8 that impart thrust to the vehicle body 2, the present technology is not limited to this example. For example, as rotary wing sections that generate thrust, only the second rotary wing sections 7 as illustrated in the foregoing embodiment may be provided or only the third rotary wing sections 8 may be provided. Even in this case, the control unit can appropriately perform control with respect to a motive power section such as the engine or motors based on signals that are input by the operation section. Further, with respect to the motive power sections also, a configuration may be adopted in which only either one of the engine and the motor is provided.

Furthermore, the effects described herein are merely illustrative and exemplary, and not limiting. That is, the technology according to the present disclosure can exert other effects that are apparent to those skilled in the art from the description herein, in addition to the above-described effects or in place of the above-described effects.

Note that the following configurations also belong to the technical scope of the present disclosure.
(Item 1) An aerial vehicle, including:
   a vehicle body extending in a front-rear direction;
   a saddle section provided on an upper side of the vehicle body;
   a grip section provided on a front side of the saddle section in the vehicle body; and
   a rotary wing section which is provided in the vehicle body and which generates lift and/or thrust with respect to the vehicle body;
   wherein:
      an operation section for performing operations pertaining to actions relating to ascent and/or
      propulsion of the vehicle body is provided in the grip section.
(Item 2) The aerial vehicle according to Item 1, wherein:
   the grip section includes an arm section which has one end connected and fixed to the vehicle body and which extends from the vehicle body; and
   the operation section is provided at a portion of the other end of the arm section.
(Item 3) The aerial vehicle according to Item 2, wherein:
   the arm section is provided in a non-rotatable condition with respect to the vehicle body.
(Item 4) The aerial vehicle according to any one of Items 1 to 3, wherein:
   the operation section includes a first input section for performing an operation that changes an altitude of the vehicle body.
(Item 5) The aerial vehicle according to any one of Items 1 to 4, wherein:
   the operation section includes a second input section for performing an operation that causes the vehicle body to rotate around a yaw axis.
(Item 6) The aerial vehicle according to any one of Items 1 to 5, wherein:
   the operation section includes a fourth input section for operating a direction indicator that indicates a traveling direction of the vehicle body.
(Item 7) The aerial vehicle according to any one of Items 1 to 6, wherein:
   the operation section includes a fourth input section for performing an operation relating to propulsion of the vehicle body.
(Item 8) The aerial vehicle according to Item 7, wherein:
   the fourth input section, at least, sends an input signal for performing adjustment of a speed of the vehicle body, or for stopping or performing hovering of the vehicle body.
(Item 9) The aerial vehicle according to Items 1 to 8, wherein:
   a pair of the grip sections are provided so as to be symmetrical in a width direction of the vehicle body; and
   at least one of the pair of grip sections has a group of the operation sections for performing operations corresponding to at least any one of propulsion, rotation and altitude of the vehicle body.

### Reference Signs List

- 1: Aerial Vehicle
- 2: Vehicle Body
- 3: Saddle Section
- 4: Grip Section
- 5: Motive Power Section
- 6: First Rotary Wing Section
- 7: Second Rotary Wing Section
- 8: Third Rotary Wing Section
- 9: Exhaust System
- 10: Control Section
- 41: Left Arm Section
- 42: Right Arm Section
- 43: Left Operation Section
- 44: Right Operation Section

## Claims

1. An aerial vehicle, comprising:
a vehicle body extending in a front-rear direction;
a saddle section provided on an upper side of the vehicle body;
a grip section provided on a front side of the saddle section in the vehicle body; and
a rotary wing section which is provided in the vehicle body and which generates lift and/or thrust with respect to the vehicle body;
wherein:
an operation section for performing operations pertaining to actions relating to ascent and/or propulsion of the vehicle body is provided in the grip section.

2. The aerial vehicle according to claim 1, wherein:
the grip section comprises an arm section which has one end connected and fixed to the vehicle body and which extends from the vehicle body; and
the operation section is provided at a portion of the other end of the arm section.

3. The aerial vehicle according to claim 2, wherein:
the arm section is provided in a non-rotatable condition with respect to the vehicle body.

4. The aerial vehicle according to any one of claims 1 to 3, wherein:
the operation section includes a first input section for performing an operation that changes an altitude of the vehicle body.

5. The aerial vehicle according to any one of claims 1 to 4, wherein:
the operation section includes a second input section for performing an operation that causes the vehicle body to rotate around a yaw axis.

6. The aerial vehicle according to any one of claims 1 to 5, wherein:
the operation section includes a fourth input section for operating a direction indicator that indicates a traveling direction of the vehicle body.

7. The aerial vehicle according to any one of claims 1 to 6, wherein:
the operation section includes a fourth input section for performing an operation relating to propulsion of the vehicle body.

8. The aerial vehicle according to claim 7, wherein:
the fourth input section, at least, sends an input signal for performing adjustment of a speed of the vehicle body, or for stopping or performing hovering of the vehicle body.

9. The aerial vehicle according to claims 1 to 8, wherein:
a pair of the grip sections are provided so as to be symmetrical in a width direction of the vehicle body; and
at least one of the pair of grip sections has a group of the operation sections for performing operations corresponding to at least any one of propulsion, rotation and altitude of the vehicle body.
